# EUROPEAN PATENT SPECIFICATION

(11) **EP 2 625 903 B1**
(45) Date of publication and mention of the grant of the patent: **08.06.2016**
(21) Application number: 10858042.4
(22) Date of filing: 09.10.2010
(51) Int. Cl.: H04W 52/00

(54) **METHOD OF DOWNLINK POWER ALLOCATION**
VERFAHREN FÜR DOWNLINK-LEISTUNGSZUWEISUNG
PROCÉDÉ D'ALLOCATION DE PUISSANCE SUR LA LIAISON DESCENDANTE

(43) Date of publication of application: 14.08.2013
(73) Proprietor: ZTE Corporation, Guangdong Province 518057 (CN); ZTE U.S.A., Inc., San Diego, CA 92121 (US)
(72) Inventor: WU, Huaming, San Diego, California 92130 (US); LI, Yu Ngok, Shenzhen Guangdong 518055 (CN); GUO, Senbao, Shaanxi 710065 (CN); XUE, Yan, Shenzhen Guangdong 518055 (CN); ZHU, Changqing, Shaanxi 710065 (CN); SUN, Yunfeng, Shaanxi 710065 (CN)
(74) Representative: Bugnion Genève
(86) International application number: PCT/CN2010/077622
(87) International publication number: WO 2012/045212

(56) References cited:
- WO-A1-2010/002299
- WO-A2-2009/151906
- US-A1- 2010 035 600
- TEXAS INSTRUMENTS: "Signaling for PDSCH Muting in Rel-10", 3GPP DRAFT; R1-105283 TI SIGNALING FOR PDSCH MUTING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Xi'an; 20101011, 5 October 2010 (2010-10-05), XP050450455, [retrieved on 2010-10-05]
- ZTE: "Radio link monitoring in non-CA based heterogeneous deployments", 3GPP DRAFT; R1-105465, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Xi'an; 20101011, 5 October 2010 (2010-10-05), XP050450587, [retrieved on 2010-10-05]
- TEXAS INSTRUMENTS: "PDSCH Muting for Inter-cell CSI estimation: Rel-8 UE Performance", 3GPP DRAFT; R1-102819 TI REL-8 UE PDSCH PERFORMANCE WITH REL-10 CSI-RS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Montreal, Canada; 20100510 - 20100514, 4 May 2010 (2010-05-04), XP050598317, [retrieved on 2010-05-04]
- TEXAS INSTRUMENTS: "PDSCH Muting: N-MSE for Inter-cell CSI Estimation", 3GPP DRAFT; R1-102820 TI NMSE FOR INTER-CELL CSI ESTIMATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Montreal, Canada; 20100510, 8 May 2010 (2010-05-08), XP050420409, [retrieved on 2010-05-08]
- SAMSUNG: "Support of Muting for LTE-A", 3GPP DRAFT; R1-104599 MUTING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Madrid, Spain; 20100823, 17 August 2010 (2010-08-17), XP050449894, [retrieved on 2010-08-17]
- LG ELECTRONICS: 'Evaluation of control channel coordination in co-channel CSG deployment' 3GPP TSG RAN WG1 MEETING #62 R1-104659 23 August 2010 - 27 August 2010, XP050449938
- 3GPP TR 36.922 V9.1.0 30 June 2010, pages 1 - 74, XP050441979

## Description

### Technical Field

This invention relates to the mechanism of downlink power allocation depending on the muting of resource elements.

### Background of the Invention

Heterogeneous network deployments consist of deployments where low power nodes (LPN) are placed throughout a macro-cell layout. There are several types of low power nodes. For example, a femto cell is a small cellular base station, typically designed for use in home or small business. It connects to the service provider's network via broadband (such as DSL or cable). A femto cell allows service providers to extend service coverage indoors, especially where access would otherwise be limited or unavailable. In 3GPP terms, a Long Term Evolution (LTE) femto-cell is called a Home eNode B (HeNB). Typically, the HeNB has no direct interface (e.g, X2 interface in 3GPP) to other femto cells or any Macro eNodeB (MeNB).

However, when deployed in the same channel, there is a severe interference problem for macro and femto User Equipments (UE). For instance, when a macro UE is in the vicinity of a femto cell, the signal from the femto cell base station is interfering with the signal from the macro cell. In such case, the macro UE may report radio link failure (RLF) to its serving macro cell. According to current 3GPP standard, such as 3GPP TS 36.133, Requirements for support of radio resource management, and 3GPP TS 36.213: "Evolved Universal Terrestrial Radio Access (E-UTRA); Physical layer procedures", the UE shall monitor the downlink link quality based on the cell-specific reference signal (e.g., common reference signal (CRS) in LTE) in order to detect the downlink radio link quality of the serving cell. The CRS of a macro cell may be received by a macro UE with other interfering signal from an adjacent femto cell as well as other neighbouring macro cells. In some case, the signal to interference and noise ratio (SINR) is lower than a threshold which in turn would cause the UE to report link failure. However, if some inter-cell interference coordination techniques such as almost blank subframe proposed in 3GPP R1-103561, Improving control reliability in severe interference conditions, is used, there may be no or negligible interference during actual transmission. The traditional radio link monitoring doesn't reflect the actual channel quality during actual transmission and hence may create unnecessary declaration of radio link failure.

Some interference management methods for radio link monitoring have been proposed. For example, a method of symbol-level time offset between HeNB and MeNB; and a method that HeNB performs resource element (RE) muting for the REs used by macro eNB's CRS is proposed in 3GPP R1-104659, Evaluation of control channel coordination in co-channel CSG deployment. Similarly, HeNB muting the REs corresponding to the CRS locations of interfering macro cells is described in "Radio link monitoring in non-CA based heterogeneous deployments", 3GPP DRAFT; R1-105465, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Xi'an; 20101011, 5 October 2010 (2010-10-05). In US20100035600 A1(Hou Jilei et al) 11 February 2010, Coordinated transmissions between cells of a base station in a wireless communications system, RE muting to coordinate the downlink reference signal between cells of a base station is disclosed. In "PDSCH Muting for Inter-cell CSI estimation: Rel-8 UE Performance", 3GPP DRAFT; R1-102819 TI REL-8 UE PDSCH PERFORMANCE WITH REL-10 CSI-RS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Montreal, Canada; 20100510 - 20100514, 4 May 2010 (2010-05-04) and in "PDSCH Muting: N-MSE for Inter-cell CSI Estimation", 3GPP DRAFT; R1-102820 TI NMSE FOR INTER-CELL CSI ESTIMATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Montreal, Canada; 20100510, 8 May 2010 (2010-05-08) , muting of PDSCH REs corresponding to CSI-RS of interfering cells are disclosed. Furthermore, since there is no power allocated to the muted REs, power reallocation of muted REs to other REs has been proposed. For example, in "Signaling for PDSCH Muting in Rel-10", 3GPP DRAFT; R1-105283 TI SIGNALING FOR PDSCH MUTING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Xi'an; 20101011, 5 October 2010 (2010-10-05), muting a cell's REs that corresponding to locations of CSI-RS of an interfering cell and allocating unused power of the muted REs to PDSCH REs is disclosed. In "Support of Muting for LTE-A", 3GPP DRAFT; R1-104599 MUTING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Madrid, Spain; 20100823, 17 August 2010 (2010-08-17), reallocating the unused power of muted REs to other PDSCH REs, or DM-RS or CSI-RS is disclosed. Note that all the aforementioned documents have not disclosed how to determine the transmission power of REs when unused power of muted REs is reallocated.

In Rel-8/9 of 3GPP TS 36.213: "Evolved Universal Terrestrial Radio Access (E-UTRA); Physical layer procedures", only certain power ratios of Physical Downlink Shared Channel (PDSCH) Energy Per Resource Element (EPRE) to cell-specific reference signal (RS) EPRE among PDSCH REs are specified. The ratio of PDSCH EPRE to cell-specific RS EPRE among PDSCH REs (not applicable to PDSCH REs with zero EPRE) for each Orthogonal Frequency Division Multiplexing (OFDM) symbol is denoted by either ρ*_{A}* or ρ*_{B}* according to the OFDM symbol index as given by Table 1.

**Table 1: OFDM symbol indices within a slot where the ratio of the corresponding PDSCH EPRE to the cell-specific RS EPRE is denoted by ρ_{A} or ρ_{B}**

| **Number of antenna ports** | **OFDM symbol indices within a slot where the ratio of the corresponding PDSCH EPRE to the cell-specific RS EPRE is denoted by *ρ_{A}*** | | **OFDM symbol indices within a slot where the ratio of the corresponding PDSCH EPRE to the cell-specific RS EPRE is denoted by *ρ_{B}*** | |
|---|---|---|---|---|
| | **Normal cyclic prefix** | **Extended cyclic prefix** | **Normal cyclic prefix** | **Extended cyclic prefix** |
| **One or two** | 1, 2, 3, 5, 6 | 1, 2, 4, 5 | 0, 4 | 0, 3 |
| **Four** | 2, 3, 5, 6 | 2, 4, 5 | 0, 1, 4 | 0, 1, 3 |

The cell-specific ratio *ρ_{B}*/*ρ_{A}* is given by Table 2 according to cell-specific parameter *P_{B}* signaled by higher layers and the number of configured eNodeB cell specific antenna ports.

**Table 2: The cell-specific ratio ρ_{B} /ρ_{A} for 1, 2, or 4 cell specific antenna ports**

| *P_{B}* | *ρ_{B}* /*ρ_{A}* | |
|---|---|---|
| | **One Antenna Port** | **Two and Four Antenna Ports** |
| 0 | 1 | 5/4 |
| 1 | 4/5 | 1 |
| 2 | 3/5 | 3/4 |
| 3 | 2/5 | 1/2 |

If power allocation is unchanged without considering the muted REs, power imbalance between different symbols would happen. Also, power is not fully utilized if power allocation is not re-designed based on the new RE muting patterns.

### Summary of the Invention

In order to avoid power imbalance between different symbols and to achieve fully utilization of power, the present invention provides a method of downlink power allocation, comprising steps of:
muting a cell's resource elements (REs) that correspond to locations of common reference signal (CRS) REs of an interfering cell; and
defining different cell-specific ratio tables depending on the number of muted CRS patterns; and
allocating unused power of the muted REs to CRS REs or a Physical Downlink Shared Channel (PDSCH) data RE of the cell after the muting.

Preferably, part of the unused power of the muted REs is allocated to the PDSCH data REs of the cell and part of the unused power of the muted REs is allocated to CRS REs of the cell.

Preferably, the method further comprises the following step before the step of allocating the unused power of the muted REs:
defining a new table to specify OFDM symbol indices within a slot where the ratio of the corresponding PDSCH EPRE to the cell-specific RS EPRE have 3 different denotations, i.e., *p_{A}* or *P_{B}* or *P_{C}.*

Preferably, the step of defining different cell-specific ratio tables comprises:
defining a new table of cell-specific ratio for the OFDM symbol 1 for one and two antenna ports.

Preferably, the method further comprises:
defining a new cell-specific parameters *P_{C}* to index to the new table of cell-specific ratio for the OFDM symbol 1.

Preferably, the method further comprises:
performing power allocation according to a cell-specific ratio in a table chosen from the different cell-specific ratio tables.

Preferably, the table is chosen from the different cell-specific ratio tables according to a current number of muted CRS patterns.

Preferably, the cell-specific ratio in the table is determined based on a cell-specific parameter signaled by higher layers.

Preferably, the method further comprises:
calculating power at user equipment for receiving data and reference signals based on the cell-specific ratio in the table.

With the method of the present invention, the unused power of the muted REs can be allocated to the CRS REs of HeNB or the PDSCH data RE of HeNB, thereby fully utilizing the available power and avoiding imbalanced power in different symbols.

### Brief Description of the Drawings

Figure 1 illustrates RE locations of PDSCH data and different reference signals;
Figure 2 illustrates the flow of power allocation based on the number of muted CRS patterns using multiple tables for each cell-specific ratio; and
Figure 3 illustrates the flow of power allocation based on the number of muted CRS patterns using one table for each cell-specific ratio.

### Preferred Embodiments of the Invention

To fully utilize the available power and to avoid imbalanced power in different symbols, power allocation is needed to be re-designed. The basic idea of this invention is to have different power allocation depending on the number of muting patterns corresponding to the CRS patterns. This mechanism can be applied to 3GPP LTE/LTE-Advanced systems.

Preferred embodiments of the present invention are described below in conjunction with the drawings.

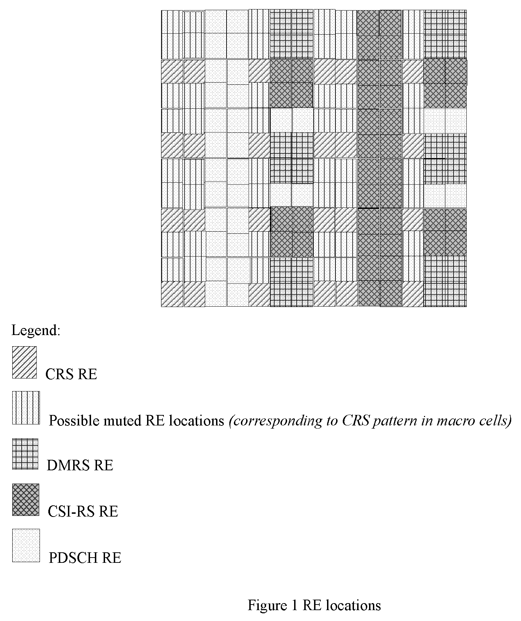

Figure 1 shows RE locations of the PDSCH data and different reference signals. As shown in figure 1, CRS REs from different cells are located in the same symbols if the number of CRS antenna ports are the same for eNB1 and eNB2. The muted REs of eNB1 are corresponding to the CRS RE locations of eNB2. Therefore, after muting, the unused power of these muted REs can be allocated to CRS REs of eNB1. Alternatively, the unused power can be allocated to the PDSCH data RE of eNB1. It is necessary if the number of CRS antenna ports are different in eNB 1 and eNB2. In this case, not all the CRS REs of these two cells are in the same symbol and hence the unused power of muted REs cannot be allocated to eNB1 CRS. The unused power of these muted REs can be allocated to PDSCH data RE of eNB1 in this case. To support this power re-allocation, a new ratio *ρ_{C}* has to be defined for the case that the muted REs are in the symbol without the CRS REs of the serving cell. New tables for cell-specific ratios *ρ_{B}* / *ρ_{A}* and *ρ_{C}* / *ρ_{A}* are needed to be defined. Here we have several tables for the cases when number of muted CRS patterns are 1, 2 and 3 respectively. eNB1 and eNB2 can be HeNB and macro eNB respectively.

**Table 3-1: OFDM symbol indices within a slot where the ratio of the corresponding PDSCH EPRE to the cell-specific RS EPRE is denoted by ρ_{A} or ρ_{B} or ρ_{C}**

| **Number of antenna ports** | **OFDM symbol indices within a slot where the ratio of the corresponding PDSCH EPRE to the cell-specific RS EPRE is denoted by *ρ_{A}*** | | **OFDM symbol indices within a slot where the ratio of the corresponding PDSCH EPRE to the cell-specific RS EPRE is denoted by *ρ_{B}*** | | **OFDM symbol indices within a slot where the ratio of the corresponding PDSCH EPRE to the cell-specific RS EPRE is denoted by *ρ_{C}*** | |
|---|---|---|---|---|---|---|
| | **Normal cyclic prefix** | **Extended cyclic prefix** | **Normal cyclic prefix** | **Extended cyclic prefix** | **Normal cyclic prefix** | **Extended cyclic prefix** |
| **One or two** | 2, 3, 5, 6 | 2, 4, 5 | 0, 4 | 0, 3 | 1 | 1 |
| **Four** | 2, 3, 5, 6 | 2, 4, 5 | 0, 1, 4 | 0, 1, 3 | N/A | N/A |

**Table 3-2: The cell-specific ratio ρ_{B} / ρ_{A} for 1, 2, or 4 cell specific antenna ports when number of muted CRS patterns is 1**

| *P_{B}* | *ρ_{B}*/*ρ_{A}* | |
|---|---|---|
| | **One Antenna Port** | **Two and Four Antenna Ports** |
| 0 | 5/3 | 5/2 |
| 1 | 4/3 | 2 |
| 2 | 5/4 | 5/3 |
| 3 | 1 | 3/2 |
| 4 | 4/5 | 4/3 |
| 5 | 3/4 | 5/4 |
| 6 | 3/5 | 1 |
| 7 | 1/2 | 3/4 |
| 8 | 2/5 | 2/3 |
| 9 | Reserved | 1/2 |

**Table 3-3: The cell-specific ratio ρ_{C} /ρ_{A} for 1 or 2 cell specific antenna ports when number of muted CRS patterns is 1**

| *P_{C}* | *ρ_{C}*/*ρ_{A}* |
|---|---|
| | **One and Two Antenna Ports** |
| 0 | 3/2 |
| 1 | 1 |

**Table 3-4: The cell-specific ratio ρ_{B} /ρ_{A} for 1, 2, or 4 cell specific antenna ports when number of muted CRS patterns is 2**

| *P_{B}* | *ρ_{B}* /*ρ_{A}* | |
|---|---|---|
| | **One Antenna Port** | **Two and Four Antenna Ports** |
| 0 | 5 | 5 |
| 1 | 4 | 4 |
| 2 | 3 | 3 |
| 3 | 5/2 | 5/2 |
| 4 | 2 | 2 |
| 5 | 3/2 | 3/2 |
| 6 | 5/3 | 5/4 |
| 7 | 4/3 | 1 |
| 8 | 1 | 3/4 |
| 9 | 4/5 | 1/2 |
| 10 | 2/3 | Reserved |
| 11 | 3/5 | Reserved |
| 12 | 2/5 | Reserved |

**Table 3-5: The cell-specific ratio ρ_{C} /ρ_{A} for 1 or 2 cell specific antenna ports when number of muted CRS patterns is 2**

| *P_{C}* | ρ_{C}/ρ_{A} |
|---|---|
| | **One and Two Antenna Ports** |
| 0 | 3 |
| 1 | 3/2 |
| 2 | 1 |
| 3 | Reserved |

Or we can use one table to represent the Tables 3-3 and 3-5 for the cell-specific ratio *p_{B}l*ρA shown in Table 3-6 below.

**Table 3-6: The cell-specific ratio ρ_{B} /ρ_{A} for 1, 2, or 4 cell specific antenna ports**

| | **One Antenna Port** | **Two and Four Antenna Ports** |
|---|---|---|
| 0 | 5 | 5 |
| 1 | 4 | 4 |
| 2 | 3 | 3 |
| 3 | 5/2 | 5/2 |
| 4 | 2 | 2 |
| 5 | 3/2 | 5/3 |
| 6 | 5/3 | 3/2 |
| 7 | 4/3 | 4/3 |
| 8 | 1 | 5/4 |
| 9 | 5/4 | 1 |
| 10 | 4/5 | 3/4 |
| 11 | 3/4 | 2/3 |
| 12 | 2/3 | 1/2 |
| 13 | 3/5 | Reserved |
| 14 | 1/2 | Reserved |
| 15 | 2/5 | Reserved |

Similarly, we can use one table to represent the Tables 3-2 and 3-4 for the cell-specific ratio ρ_{C} /ρ*_{A}* as shown in Table 3-7 below.

**Table 3-7: The cell-specific ratio ρ_{C} /ρ_{A} for 1 or 2 cell specific antenna ports.**

| *P_{C}* | *ρ*_{C}/*ρ*_{A} |
|---|---|
| | **One and Two Antenna Ports** |
| 0 | 3 |
| 1 | 3/2 |
| 2 | 1 |
| 3 | Reserved |

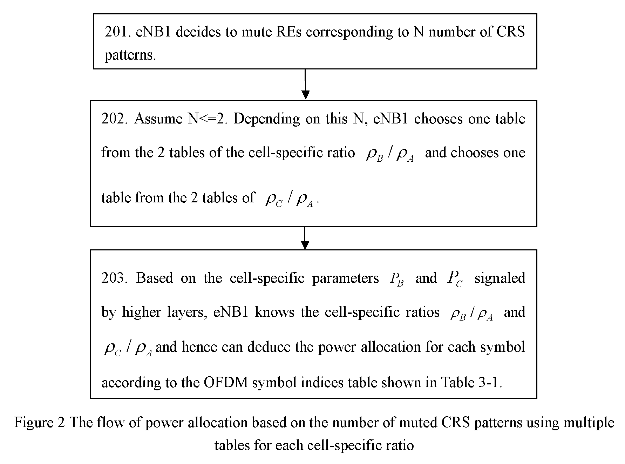

Figure 2 shows the flow of power allocation based on the number of muted CRS patterns according to the present invention, comprising steps of:
201. eNB1 decides to mute REs corresponding to N number of CRS patterns;
202. Assume N<=2. Depending on this N, eNB1 chooses one table from 2 tables of the cell-specific ratio ρ*_{B}* /ρ_{A} and chooses one table from 2 tables of ρ*_{C}* /ρ*_{A}.*
203. Based on the cell-specific parameters *P_{B}* and *P_{C}* signaled by higher layers, eNB1 knows the cell-specific ratios *ρ_{B}* / *ρ_{A}* and ρ*_{C}* ρ*l_{A}* and hence can deduce the power allocation for each symbol according to the OFDM symbol indices table shown in Table 3-1.

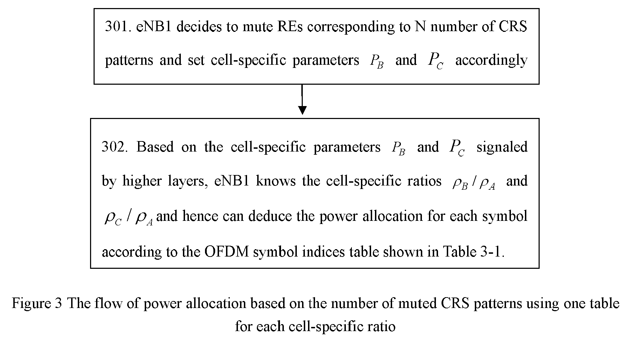

Figure 3 shows the flow of power allocation based on the number of muted CRS patterns according to the present invention if only one unified table is defined each for, comprising steps of:
301. eNB1 decides to mute REs corresponding to N number of CRS patterns and set cell-specific parameters *P_{B}* and *P_{C}* accordingly at higher layers.
302. Based on the cell-specific parameters *P_{B}* and *P_{C}* signaled by higher layers, eNB1 knows the cell-specific ratios *ρ_{B}* / *ρ_{A}* and ρ_{C}/ρ*_{A}* and hence can deduce the power allocation for each symbol according to the OFDM symbol indices table shown in Table 3-1.

At the UE side, power calculation is performed for receiving data and RS signal by looking up the table depending on the number of muted CRS patterns for the cell-specific ratio.

Other variations and enhancements are possible based on the preferred embodiments described above. It shall be understood that the above detailed description of the preferred embodiments of the present invention is not limitation to the protection scope of the present invention, which is defined by the claims.

### Industrial Applicability

The method of downlink resource allocation provided in the present invention can be applied to 3GPP LTE/LTE-Advanced systems. According to the present invention, the unused power of the muted REs can be allocated to the CRS REs of HeNB or the PDSCH data RE of HeNB, thereby fully utilizing the available power and avoiding imbalanced power in different symbols.

## Claims

1. A method of downlink power allocation, comprising steps of:
muting a cell's resource elements, REs, that correspond to locations of common reference signal, CRS, REs of an interfering cell; and
defining different cell-specific ratio tables depending on the number of muted CRS patterns; and
allocating unused power of the muted REs to CRS REs and/or a Physical Downlink Shared Channel, PDSCH, data REs of the cell after the muting.

2. The method as claimed in claim 1, further comprising the following step before the step of allocating the unused power of the muted REs:
defining a new table to specify Orthogonal Frequency Division Multiplexing, OFDM, symbol indices within a slot where the ratio of the corresponding PDSCH Energy Per Resource Element, EPRE, to the cell-specific reference signal, RS, EPRE have 3 different denotations.

3. The method as claimed in claim 1, wherein the step of defining different cell-specific ratio tables comprises:
defining a new table of cell-specific ratio for Orthogonal Frequency Division Multiplexing, OFDM, symbol 1 for one and two antenna ports.

4. The method as claimed in claim 3, further comprising:
defining a new cell-specific parameter to index to the new table of cell-specific ratio for the OFDM symbol 1.

5. The method as claimed in claim 1, further comprising:
performing power allocation according to a cell-specific ratio in a table chosen from the different tables of cell-specific ratio.

6. The method as claimed in claim 5, wherein the table is chosen from the different cell-specific ratio tables according to a current number of muted CRS patterns.

7. The method as claimed in claim 5, wherein the cell-specific ratio in the table is determined based on a cell-specific parameter signaled by higher layers.

8. The method as claimed in claim 5, further comprising:
calculating power at user equipment for receiving data and reference signals based on the cell-specific ratio in the table.

## Patentansprüche

1. Verfahren zum Zuweisen einer Abwärtsstreckenleistung, umfassend folgende Schritte:
Stummschalten der Betriebsmittelelemente, RE, einer Zelle, die Standorten von RE eines gemeinsamen Referenzsignals, CRS, einer störenden Zelle entsprechen; und
Definieren von verschiedenen, zellenspezifischen Verhältnistabellen in Abhängigkeit von der Anzahl stummgeschalteter CRS-Muster; und
Zuweisen der nicht verwendeten Leistung der stummgeschalteten RE zu den CRS-RE und/oder zu den Daten-RE eines geteilten physischen Abwärtsstreckenkanals, PDSCH, der Zelle nach dem Stummschalten.

2. Verfahren nach Anspruch 1, ferner umfassend den folgenden Schritt vor dem Schritt des Zuweisens der nicht verwendeten Leistung der stummgeschalteten RE:
Definieren einer neuen Tabelle, um Symbolindexe eines orthogonalen Frequenzmultiplexverfahrens, OFDM, innerhalb eines Zeitschlitzes vorzugeben, wobei das Verhältnis der entsprechenden Energie-pro-Betriebsmittelelement, EPRE, des PDSCH zu dem zellenspezifischen EPRE eines Referenzsignals, RS, 3 verschiedene Bedeutungen aufweist.

3. Verfahren nach Anspruch 1, wobei der Schritt des Definierens von verschiedenen zellenspezifischen Verhältnistabellen Folgendes umfasst:
Definieren einer neuen Tabelle von zellenspezifischen Verhältnissen für ein Symbol 1 des orthogonalen Frequenzmultiplexverfahrens, OFDM, für einen oder zwei Antennenanschlüsse.

4. Verfahren nach Anspruch 3, ferner umfassend folgenden Schritt:
Definieren eines neuen zellenspezifischen Parameters zum Indizieren der neuen Tabelle von zellenspezifischen Verhältnissen für das OFDM-Symbol 1.

5. Verfahren nach Anspruch 1, ferner umfassend folgenden Schritt:
Ausführen einer Leistungszuweisung gemäß einem zellenspezifischen Verhältnis in einer Tabelle, die aus den verschiedenen Tabellen von zellenspezifischen Verhältnissen ausgewählt wird.

6. Verfahren nach Anspruch 5, wobei die Tabelle aus den verschiedenen zellenspezifischen Verhältnistabellen gemäß einer aktuellen Anzahl von stummgeschalteten CRS-Mustern ausgewählt wird.

7. Verfahren nach Anspruch 5, wobei das zellenspezifische Verhältnis in der Tabelle auf der Grundlage eines zellenspezifischen Parameters bestimmt wird, der durch höhere Schichten signalisiert wird.

8. Verfahren nach Anspruch 5, ferner umfassend folgenden Schritt:
Berechnen der Leistung an einem Benutzergerät, um Daten und Referenzsignale zu empfangen, auf der Grundlage des zellenspezifischen Verhältnisses in der Tabelle.

## Revendications

1. Procédé d'allocation de puissance de liaison descendante, comprenant les étapes consistant à :
désactiver les éléments de ressource, RE, d'une cellule qui correspondent à des emplacements de RE d'un signal de référence commun, CRS, d'une cellule d'interférence ; et
définir différentes tables de rapports spécifiques à la cellule en fonction du nombre de modèles de CRS désactivés ; et
allouer la puissance non utilisée des RE désactivés aux RE de CRS et/ou à des RE de données d'un canal partagé de liaison descendante physique, PDSCH, de la cellule après la désactivation.

2. Procédé selon la revendication 1, comprenant en outre l'étape suivante avant l'étape d'allocation de la puissance inutilisée des RE désactivés :
définir une nouvelle table pour spécifier des indices de symbole d'un multiplexage par répartition orthogonale de la fréquence, OFDM, à l'intérieur d'un créneau où le rapport de l'énergie par élément de ressource, EPRE, correspondante du PDSCH à l'EPRE du signal de référence, RS, spécifique à la cellule présente 3 dénotations différentes.

3. Procédé selon la revendication 1, dans lequel l'étape de la définition de différentes tables de rapports spécifiques à la cellule comprend l'étape consistant à :
définir une nouvelle table de rapports spécifique à la cellule pour un symbole 1 du multiplexage par répartition orthogonale de la fréquence, OFDM, pour une et deux bornes d'antenne.

4. Procédé selon la revendication 3, comprenant en outre l'étape consistant à :
définir un nouveau paramètre spécifique à la cellule pour indexer la nouvelle table de rapports spécifique à la cellule pour le symbole 1 de l'OFDM.

5. Procédé selon la revendication 1, comprenant en outre l'étape consistant à :
effectuer une allocation de puissance selon un rapport spécifique à la cellule dans une table choisie parmi les différentes tables de rapports spécifiques à la cellule.

6. Procédé selon la revendication 5, dans lequel la table est choisie parmi les différentes tables de rapports spécifiques à la cellule selon un nombre actuel de modèles de CRS désactivés.

7. Procédé selon la revendication 5, dans lequel le rapport spécifique à la cellule dans la table est déterminé sur la base d'un paramètre spécifique à la cellule signalé par des couches supérieures.

8. Procédé selon la revendication 5, comprenant en outre l'étape consistant à :
calculer la puissance au niveau d'un équipement utilisateur pour recevoir des données et des signaux de référence sur la base du rapport spécifique à la cellule dans la table.
